# EUROPEAN PATENT SPECIFICATION

(11) **EP 3 007 472 B1**
(45) Date of publication and mention of the grant of the patent: **08.05.2019**
(21) Application number: 14807773.8
(22) Date of filing: 27.05.2014
(51) Int. Cl.: H04W 4/10, H04L 29/06

(54) **SERVICE SCHEDULING METHOD, SYSTEM, TERMINAL AND STORAGE MEDIUM BASED ON CLUSTERING SYSTEM**
DIENSTPLANUNGSVERFAHREN, SYSTEM, ENDGERÄT UND SPEICHERMEDIUM AUF BASIS EINES CLUSTERSYSTEMS
PROCÉDÉ DE PLANIFICATION DE SERVICE, SYSTÈME, TERMINAL ET SUPPORT D'INFORMATIONS BASÉS SUR UN SYSTÈME DE REGROUPEMENT

(30) Priority: 07.06.2013 CN 201310226068
(43) Date of publication of application: 13.04.2016
(73) Proprietor: ZTE Corporation, Shenzhen, Guangdong 518057 (CN)
(72) Inventor: YANG, Fei, Shenzhen Guangdong 518057 (CN); YU, Xi, Shenzhen Guangdong 518057 (CN)
(74) Representative: Lavoix
(86) International application number: PCT/CN2014/078548
(87) International publication number: WO 2014/194782

(56) References cited:
- WO-A1-2007/037644
- CN-A- 1 838 791
- CN-A- 101 026 814
- CN-A- 101 047 905
- US-A1- 2008 318 610
- US-A1- 2013 115 995

## Description

### Technical field

The present disclosure relates to trunking communication technology, and in particularly, to a method, a system, a terminal and a storage medium for service scheduling based on a trunking system.

### Background

In a trunking system, a plurality of terminal users may be presented in a group. In transmission of service data, only one terminal user in the group may be a speaking right terminal user, and other terminal users are non-speaking right terminal users. Only the speaking right terminal user can send service data, and the non-speaking right terminal users only can receive service data. In this mode of service data transmission, only one speaking right terminal user and a plurality of non-speaking right terminal users are presented in a group, which makes the non-speaking right terminal users not send service data, thus resulting in low resource utilization rate in the trunking system.

The document D1 (US 2008/0318610 A1) relates to sharing media in a group communication among a plurality of wireless communications devices, such as among a Push-to-Talk (PTT) group. A wireless communication device member of a communication group has the ability to share media among the other member devices of the communication group, such as a PTT target group, either during an ongoing group communication or separately therefrom. The solution allows the group-directed media of any size to be communicated without unduly utilizing device resources.

### Summary

In view of that, embodiments of the present disclosure provide a service scheduling method per claim 1, a trunking system per claim 5, a terminal per claim 8 and a storage medium per claim 10 such that non-speaking right terminal users can send service data, thus improving the resource utilization rate in the trunking system.

Preferred embodiments are defined by the dependent claims.

### Brief description of the drawings

Fig. 1 is a schematic flowchart 1 of a service scheduling method based on a trunking system in accordance with an embodiment of the present disclosure;
Fig. 2 is a schematic flowchart 2 of a service scheduling method based on a trunking system in accordance with an embodiment of the present disclosure;
Fig. 3 is a schematic flowchart 3 of a service scheduling method based on a trunking system in accordance with an embodiment of the present disclosure;
Fig. 4 is a schematic flowchart 4 of a service scheduling method based on a trunking system in accordance with an embodiment of the present disclosure;
Fig. 5 is a schematic flowchart 5 of a service scheduling method based on a trunking system in accordance with an embodiment of the present disclosure;
Fig. 6 is a schematic flowchart 6 of a service scheduling method based on a trunking system in accordance with an embodiment of the present disclosure;
Fig. 7 is a schematic flowchart 7 of a service scheduling method based on a trunking system in accordance with an embodiment of the present disclosure;
Fig. 8 is a schematic structural diagram of a trunking system in accordance with an embodiment of the present disclosure; and
Fig. 9 is a schematic structural diagram of a terminal based on a trunking system in accordance with an embodiment of the present disclosure.

### Detailed description

For more thorough understanding of the features and technical content of the present disclosure, the embodiments of the present disclosure are described in further detail below in conjunction with the accompanying drawings. The accompanying drawings are only illustrative and not intended to limit the present disclosure.

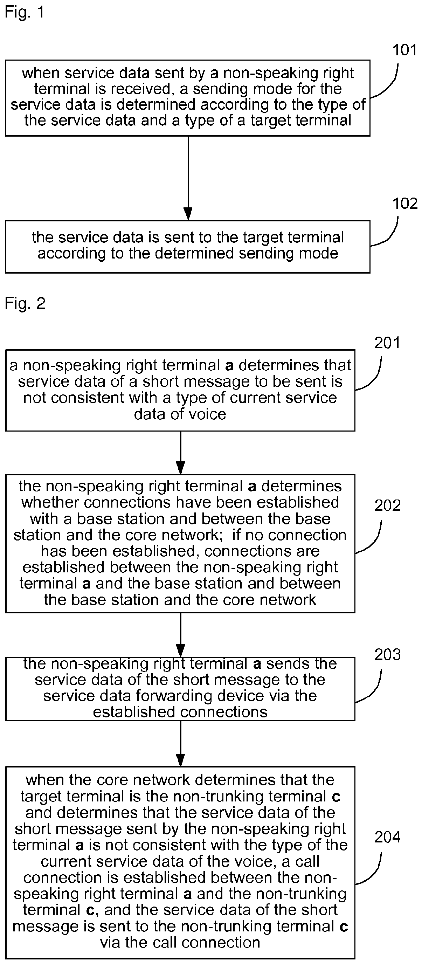

The present disclosure provides a service scheduling method based on a trunking system. The trunking system includes a core network. As shown in Fig. 1, the method includes the following steps.

At step 101, when service data sent by a non-speaking right terminal is received, the core network may determine a sending mode for the service data according to the type of the service data and the type of a target terminal.

Preferably, determining a sending mode for the service data according to the type of the service data and the type of a target terminal may include that:
when the core network determines that the type of the service data is not consistent with a type of current service data and further determines that the target terminal is a non-trunking terminal, a call connection is established between the non-speaking right terminal and the target terminal via the core network, and the service data is sent via the call connection; when the core network further determines that the target terminal is in the group to which the non-speaking right terminal belongs, the service data is sent via the core network; when the core network further determines that the target terminal is in a group rather than the group to which the non-speaking right terminal belongs, a call connection is established between the non-speaking right terminal and the group to which the target terminal belongs via the core network, and the service data is sent via the call connection.

Herein, the target terminal being not in the group to which the non-speaking right terminal belongs means that the target terminal is a non-trunking terminal or the target terminal is in a group rather than the group to which the non-speaking right terminal belongs.

Preferably, determining the sending mode for the service data according to the type of the service data and the type of a target terminal may further include that:
when the core network determines that the type of the service data is not consistent with a type of current service data, the service data is sent to a service data forwarding device; when the core network further determines that the target terminal is a non-trunking terminal, a call connection is established between the non-speaking right terminal and the target terminal via the service data forwarding device and the core network, and the service data is sent via the call connection; when the core network further determines that the target terminal is in the group to which the non-speaking right terminal belongs, the service data is sent via the service data forwarding device and the core network; when the core network further determines that the target terminal is in a group rather than the group to which the non-speaking right terminal belongs, a call connection is established between the non-speaking right terminal and the group to which the target terminal belongs via the service data forwarding device and the core network, and the service data is sent via the call connection.

Preferably, before receiving the service data sent by the non-speaking right terminal, the step 101 may further include that:
when the non-speaking right terminal determines that the type of the service data is not consistent with the type of the current service data, the service data is sent to the core network via a base station.

Preferably, before sending the service data by the base station to the core network, the step 101 may further include that:
when the core network determines that a connection has not been established between the non-speaking right terminal and the base station, and between the base station and the core network, a connection is established between the non-speaking right terminal and the base station, and a connection is established between the base station and the core network; and then the service data is sent to the core network via the established connections.

At step 102, the core network may send the service data to the target terminal according to the determined sending mode.

Specifically, when the core network determines that the type of the service data is consistent with the type of the current service data and further determines that the target terminal is in the group to which the non-speaking right terminal belongs, a speaking right is applied for the non-speaking right terminal , and the service data is sent to the target terminal after a successful application for the speaking right; when the core network further determines that the target terminal is not in the group to which the non-speaking right terminal belongs, the core network waits for release of the current service data, and sends the service data to the target terminal after the release of the current service data. Alternatively, when it is determined that the type of the service data is not consistent with the type of current service data and further determined that the target terminal is a non-trunking terminal, a call connection is established between the non-speaking right terminal and the target terminal via the core network, and the service data is sent to the target terminal via the call connection; when it is further determined that the target terminal is in the group to which the non-speaking right terminal belongs, the service data is sent to the target terminal via the core network; when it is further determined that the target terminal is in a group rather than the group to which the non-speaking right terminal belongs, a call connection is established between the non-speaking right terminal and the group to which the target terminal belongs via the core network, and the service data is sent to the target terminal via the call connection.

The service scheduling method based on the trunking system as shown in Fig. 1 will be described in further detail below in conjunction with specific embodiments.

In a trunking system, a call connection has been established in a group A. A speaking right terminal may send service data of voice via the call connection, and a non-speaking right terminal may receive the service data of the voice via the call connection. A non-speaking right terminal **a** in the group A needs to send service data of a short message to a non-trunking terminal **c**. According to the service scheduling method based on the trunking system as shown in Fig. 1, the steps as shown in Fig. 2 are performed.

At step 201, the non-speaking right terminal **a** determines that the service data of the short message to be sent is not consistent with the type of the current service data of the voice.

At step 202, the non-speaking right terminal **a** determines whether connections have been established with a base station and between the base station and the core network; if no connection has been established, connections are established with the base station and between the base station and the core network.

At step 203, the non-speaking right terminal **a** sends the service data of the short message to the core network via the established connections.

At step 204, when the core network determines that the target terminal is the non-trunking terminal **c** and determines that the service data of the short message sent by the non-speaking right terminal **a** is not consistent with the type of the current service data of the voice, a call connection is established between the non-speaking right terminal **a** and the non-trunking terminal **c,** and the service data of the short message is sent to the non-trunking terminal **c** via the call connection.

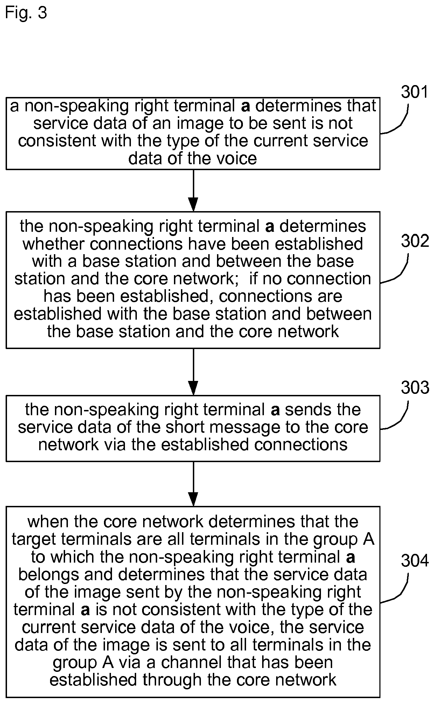

In a trunking system, a call connection has been established in a group A. A speaking right terminal may send service data of voice via the call connection, and a non-speaking right terminal may receive the service data of the voice via the call connection. A non-speaking right terminal **a** in the group A needs to send service data of an image to all terminals in the group A. According to the service scheduling method based on the trunking system as shown in Fig. 1, the steps as shown in Fig. 3 are performed.

At step 301, the non-speaking right terminal **a** determines that the service data of the image to be sent is not consistent with the type of current service data of the voice.

At step 302, the non-speaking right terminal **a** determines whether a connection has been established with a base station and a connection has been established between the base station and the core network. If no connection has been established, a connection with the base station and a connection between the base station and the core network are established.

At step 303, the non-speaking right terminal **a** sends the service data of the short message to the core network via the established connections.

At step 304, when the core network determines that the target terminals are all terminals in the group A to which the non-speaking right terminal **a** belongs and determines that the service data of the image sent by the non-speaking right terminal **a** is not consistent with the type of the current service data of the voice, the service data of the image is sent to all terminals in the group A via a channel that has been established through the core network.

In the above solution, the non-speaking right terminal **a** can receive the service data of the voice and at the same time send the service data of the image. The speaking right terminal in the group A can send the service data of the voice and at the same time receive the service data of the image. Other non-speaking right terminals except the non-speaking right terminal **a** in the group A can receive the service data of the voice and at the same time receive the service data of the image. In this way, the service data may be transmitted in parallel, which improves the resource utilization rate in the trunking system.

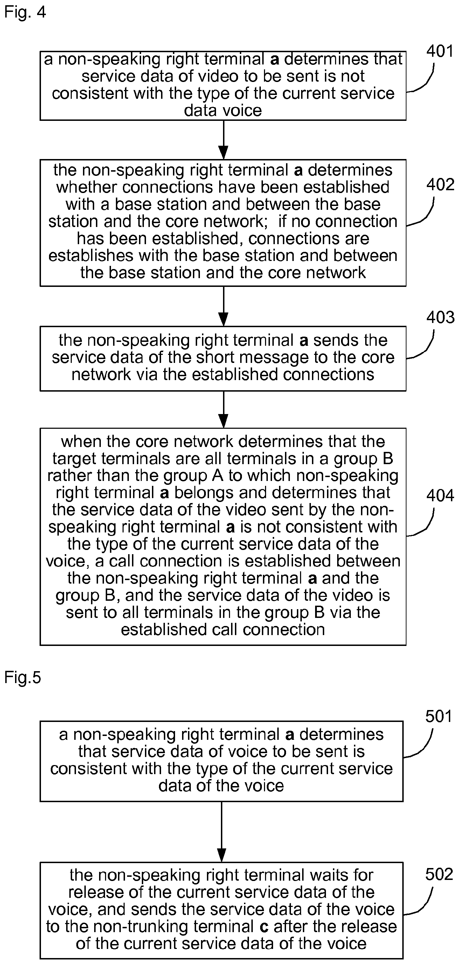

In a trunking system, a call connection has been established in a group A. A speaking right terminal may send service data of voice via the call connection, and a non-speaking right terminal may receive the service data of the voice via the call connection. A non-speaking right terminal **a** in the group A needs to send service data of video to all terminals in a group B. According to the service scheduling method based on the trunking system as shown in Fig. 1, the steps as shown in Fig. 4 are performed.

At step 401, the non-speaking right terminal **a** determines that the service data of the video to be sent is not consistent with the type of the current service data of the voice.

At step 402, the non-speaking right terminal **a** determines whether connections have been established with a base station and between the base station and the core network. If no connection has been established, connections with the base station and between the base station and the core network are established.

At step 403, the non-speaking right terminal **a** sends the service data of the short message to the core network via the established connections.

At step 404, when the core network determines that the target terminals are all terminals in the group B rather than the group A to which non-speaking right terminal **a** belongs and determines that the service data of the video sent by the non-speaking right terminal **a** is not consistent with the type of the current voice service data of the voice, a call connection is established between the non-speaking right terminal **a** and the group B, and the service data of the video is sent to all terminals in the group B via the established call connection.

In a trunking system, a call connection has been established in a group A. A speaking right terminal may send service data of voice via the call connection, and a non-speaking right terminal may receive the service data of the voice via the call connection. A non-speaking right terminal **a** in the group A needs to send service data of voice to a non-trunking terminal **c**. According to the service scheduling method based on the trunking system as shown in Fig. 1, the steps as shown in Fig. 5 are performed.

At step 501, the non-speaking right terminal **a** determines that the service data of the voice to be sent is consistent with the type of the current service data of the voice.

At step 502, the non-speaking right terminal **a** waits for release of the current service data of the voice, and sends the service data of the voice to the non-trunking terminal **c** after the release of the current service data of the voice.

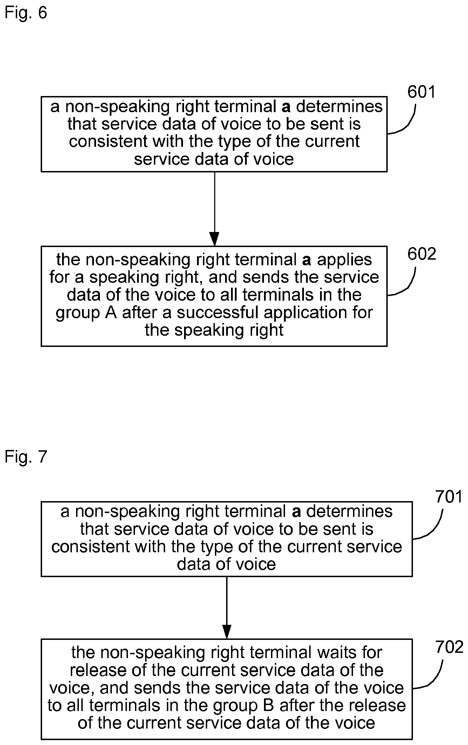

In a trunking system, a call connection has been established in a group A. A speaking right terminal may send service data of voice via the call connection, and a non-speaking right terminal may receive the service data of the voice via the call connection. A non-speaking right terminal **a** in the group A needs to send service data of voice to all terminals in the group A. According to the service scheduling method based on the trunking system as shown in Fig. 1, the steps as shown in Fig. 6 are performed.

At step 601, the non-speaking right terminal **a** determines that the service data of the voice to be sent is consistent with the type of the current service data of the voice.

At step 602, the non-speaking right terminal **a** applies for a speaking right, and sends the service data of the voice to all terminals in the group A after a successful application for the speaking right.

In a trunking system, a call connection has been established in a group A. A speaking right terminal may send service data of voice via the call connection, and a non-speaking right terminal may receive the service data of the voice via the call connection. A non-speaking right terminal **a** in the group A needs to send service data of voice to all terminals in a group B. According to the service scheduling method based on the trunking system as shown in Fig. 1, the steps as shown in Fig. 7 are performed.

At step 701, the non-speaking right terminal **a** determines that the service data of the voice to be sent is consistent with the type of the current service data of the voice.

At step 702, the non-speaking right terminal **a** waits for release of the current voice service data of the voice, and sends the voice service data of the voice to all terminals in the group B after the release of the current service data of the voice.

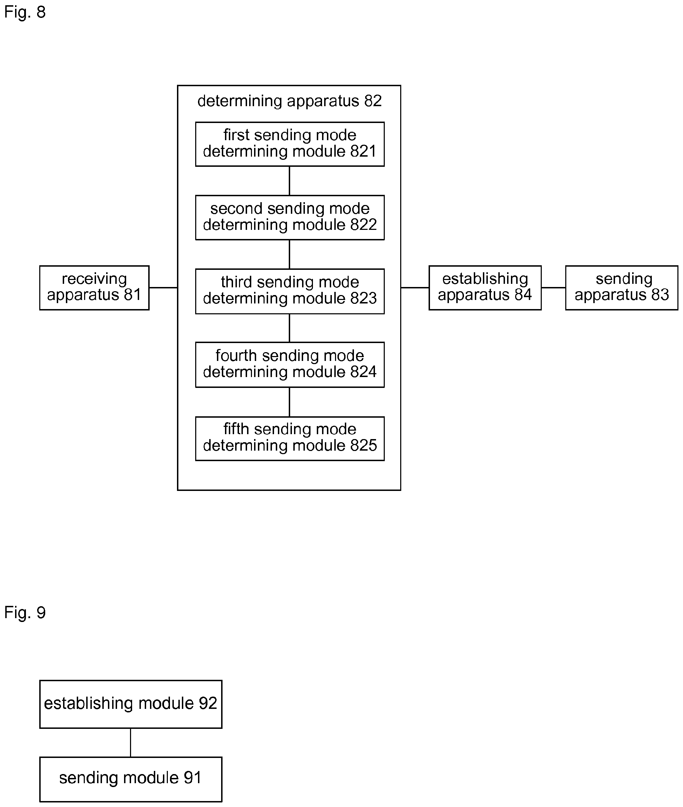

With respect to the service scheduling method based on the trunking system as shown in Fig. 1, the present disclosure also provides a trunking system. As shown in Fig. 8, the system includes a receiving apparatus 81, a determining apparatus 82 and a sending apparatus 83.

The receiving apparatus 81 is configured to receive service data sent by a non-speaking right terminal.

The determining apparatus 82 is configured to determine a sending mode for the service data according to the type of the service data and a type of a target terminal.

The sending apparatus 83 is configured to send the service data to the target terminal according to the determined sending mode.

Preferably, the determining apparatus 82 may include: a first sending mode determining module 821, a second sending mode determining module 822 and a third sending mode determining module 823.

The first sending mode determining module 821 may be configured to, when it is determined that the type of the service data is not consistent with the type of the current service data and further determined that the target terminal is a non-trunking terminal, establish a call connection between the non-speaking right terminal and the target terminal via the core network, and send the service data via the call connection.

The second sending mode determining module 822 may be configured to, when it is determined that the type of the service data is not consistent with the type of the current service data and further determined that the target terminal is in the group to which the non-speaking right terminal belongs, send the service data via the core network.

The third sending mode determining module 823 may be configured to, when it is determined that the type of the service data is not consistent with type of current service data and further determined that the target terminal is in a group rather than the group to which the non-speaking right terminal belongs, establish a call connection between the non-speaking right terminal and the group to which the target terminal belongs via the core network, and send the service data via the call connection.

Preferably, the determining apparatus may further include: a fourth sending mode determining module 824 and a fifth sending mode determining module 825.

The fourth sending mode determining module 824 may be configured to, when it is determined that the type of the service data is consistent with the type of the current service data and further determined that the target terminal is in the group to which the non-speaking right terminal belongs, apply for a speaking right for the terminal, and send the service data after a successful application for the speaking right.

The fifth sending mode determining module 825 may be configured to, when it is determined that the type of the service data is consistent with the type of the current service data and further determined that the target terminal is not in the group to which the non-speaking right terminal belongs, wait for release of the current service data, and send the service data after the release of the current service data.

Preferably, the system may further include an establishing apparatus 84.

The establishing apparatus 84 may be configured to, when it is determined that a connection has not been established between the non-speaking right terminal and the base station, and between the base station and the core network, establish a connection between the non-speaking right terminal and the base station, and establish a connection between the base station and the core network.

The sending apparatus 83 may be further configured to receive the service data sent by the non-speaking right terminal via the established connections.

In the embodiments of the present disclosure, the receiving apparatus 81 may be implemented by a base station, the determining apparatus 82 may be implemented by a base station, a base station controller, a mobile management unit and so on, and the sending apparatus 83 may be implemented by a base station. The establishing apparatus 84 may be implemented by a base station, a base station controller and so on.

It will be apparent to those skilled in the art that the functions implemented by various devices and modules in the trunking system as shown in Fig. 8 can be obtained from the description related to the service scheduling method based on the trunking system as previously described. The functions implemented by various devices and modules in the trunking system as shown in Fig. 8 can be implemented by programs running on a processor or specific logical circuits.

The present disclosure also provides a terminal based on a trunking system. As shown in Fig. 9, the terminal may include a sending module 91.

The sending module 91 may be configured to, when the terminal sends service data in a non-speaking right mode, determine that the type of the service data is not consistent with a type of current service data, and send the service data via a base station to a core network.

Preferably, the terminal may further include an establishing module 92.

The establishing module 92 may be configured to, when it is determined that a connection has not been established between the non-speaking right terminal and the base station, and between the base station and the core network, establish a connection between the non-speaking right terminal and the base station, and establish a connection between the base station and the core network.

The sending module 91 may be further configured to send the service data to the core network via the established connections.

In the embodiments of the present disclosure, the sending module 91 and the establishing module 92 each may be implemented by an antenna system in the terminal.

It will be apparent to those skilled in the art that the functions implemented by various modules in the terminal based on the trunking system as shown in Fig. 9 can be obtained from the description related to the service scheduling method based on a trunking system as previously described. The functions implemented by various modules in the terminal based on the trunking system as shown in Fig. 9 can be implemented by programs running on a processor or specific logical circuits.

The present disclosure also provides a storage medium having a computer program stored therein; the computer program is configured to perform the service scheduling method based on the trunking system described in the previous embodiments.

The above are only the preferred embodiments of the present disclosure, and are not intended to limit the protection scope of the present disclosure.

### Industrial Applicability

In the present disclosure, when a trunking base station receives service data sent by a non-speaking right terminal, a sending mode for the service data is determined according to the type of the service data and the type of a target terminal, and the service data is sent to the target terminal according to the determined sending mode. As such, a non-speaking right terminal user can send service data such that the non-speaking right terminal user not only can receive service data but also can send service data, which achieves a concurrent transmission of service data and improves the resource utilization rate in the trunking system.

## Claims

1. A service scheduling method based on a trunking system comprising a core network, wherein the method comprises:
when service data sent by a non-speaking right terminal is received, determining (101), by the core network, a sending mode for the service data according to a type of the service data and a type of a target terminal, and sending (102) the service data to the target terminal according to the determined sending mode,
wherein determining the sending mode for the service data according to the type of the service data and the type of the target terminal comprises:
in the case that the core network determines that the type of the service data is not the same as a type of service data being sent by a speaking right terminal (201),
when the core network further determines that the target terminal is a non-trunking terminal, establishing (204) a call connection between the non-speaking right terminal and the target terminal via the core network, and sending the service data via the call connection;
when the core network further determines that the target terminal is in the group to which the non-speaking right terminal belongs, sending (304) the service data via the core network; and
when the core network further determines that the target terminal is in a group rather than the group to which the non-speaking right terminal belongs, establishing (404) a call connection between the non-speaking right terminal and the group to which the target terminal belongs via the core network, and sending the service data via the call connection; wherein the method is further **characterized by** comprising :
in the case that the core network determines that the type of the service data is the same as the type of the service data being sent by the speaking right terminal (501),
when the core network further determines that the target terminal is not in the group to which the non-speaking right terminal belongs, waiting (502, 702) for release of the service data being sent by the speaking right terminal, and sending the service data after the release of the service data being sent by the speaking right terminal.

2. The service scheduling method according to claim 1, wherein determining the sending mode for the service data according to the type of the service data and the type of the target terminal further comprises:
in the case that the core network determines that the type of the service data is the same as the type of the service data being sent by the speaking right terminal, when the core network further determines that the target terminal is in the group to which the non-speaking right terminal belongs, applying (602) for a speaking right for the non-speaking right terminal, and sending the service data after a successful application for the speaking right.

3. The service scheduling method according to claim 1, further comprising: before the service data sent by the non-speaking right terminal is received,
when the non-speaking right terminal determines that the type of the service data is not the same as the type of the service data being sent by the speaking right terminal, sending the service data via a base station to the core network.

4. The service scheduling method according to claim 3, further comprising: before sending the service data by the base station to the core network,
when the core network determines that connections have not been established between the non-speaking right terminal and the base station, and between the base station and the core network, establishing connections between the non-speaking right terminal and the base station, and between the base station and the core network (202, 302, 402); and
sending (203, 303, 403) the service data to the core network via the established connections.

5. A trunking system, comprising: a receiving apparatus (81), a determining apparatus (82) and a sending apparatus (83),
wherein the receiving apparatus (81) is configured to receive service data sent by a non-speaking right terminal;
the determining apparatus (82) is configured to determine a sending mode for the service data according to the type of the service data and a type of a target terminal; and
the sending apparatus (83) is configured to send the service data to the target terminal according to the determined sending mode,
wherein the determining apparatus (82) comprises: a first sending mode determining module (821), a second sending mode determining module (822) and a third sending mode determining module (823),
wherein the first sending mode determining module (821) is configured to, when it is determined that the type of the service data is not the same as a type of service data being sent by a speaking right terminal and it is further determined that the target terminal is a non-trunking terminal, establish a call connection between the non-speaking right terminal and the target terminal via a core network, and send the service data via the call connection;
the second sending mode determining module (822) is configured to, when it is determined that the type of the service data is not the same as the type of the service data being sent by the speaking right terminal and it is further determined that the target terminal is in the group to which the non-speaking right terminal belongs, send the service data via the core network; and
the third sending mode determining module (823) is configured to, when it is determined that the type of the service data is not the same as the type of the service data being sent by the speaking right terminal and it is further determined that the target terminal is in a group rather than the group to which the non-speaking right terminal belongs, establish a call connection between the non-speaking right terminal and the group to which the target terminal belongs via the core network, and send the service data via the call connection, wherein the trunking system is further **characterized by** comprising :
wherein the determining apparatus (82) further comprises a fifth sending mode determining module (825), configured to, when it is determined that the type of the service data is the same as the type of the service data being sent by the speaking right terminal and it is further determined that the target terminal is not in the group to which the non-speaking right terminal belongs, wait for release of the service data being sent by the speaking right terminal, and send the service data after the release of the service data being sent by the speaking right terminal.

6. The trunking system according to claim 5, wherein the determining apparatus (82) further comprises: a fourth sending mode determining module (824),
configured to, when it is determined that the type of the service data is the same as the type of the service data being sent by the speaking right terminal and it is further determined that the target terminal is in the group to which the non-speaking right terminal belongs, apply for a speaking right for the non-speaking right terminal, and send the service data after a successful application for the speaking right.

7. The trunking system according to claim 5, further comprising an establishing apparatus (84) configured to, when it is determined that connections have not been established between the non-speaking right terminal and a base station, and between the base station and a core network, establish connections between the non-speaking right terminal and the base station, and between the base station and the core network;
the receiving apparatus (81) is further configured to receive the service data sent by the non-speaking right terminal via the established connections.

8. A terminal based on a trunking system, comprising: a sending module (91) configured to,
when the terminal sends service data in a non-speaking right mode and it is determined that the type of the service data is not the same as a type of service data being sent by a speaking right terminal, send the service data via a base station to a core network, wherein the terminal is further **characterized by** comprising :
wherein when it is determined that the type of the service data is the same as the type of the service data being sent by the speaking right terminal and it is further determined that a target terminal is not in the group to which the terminal belongs, the sending module is further configured to wait for release of the service data being sent by the speaking right terminal, and send the service data after the release of the service data being sent by the speaking right terminal.

9. The terminal according to claim 8, further comprising an establishing module (92) configured to, when it is determined that connections have not been established between the non-speaking right terminal and the base station, and between the base station and the core network, establish connections between the non-speaking right terminal and the base station, and between the base station and the core network;
the sending module (91) is further configured to send the service data to the core network via the established connections.

10. A storage medium having a computer program stored therein, wherein the computer program is configured to perform the service scheduling method based on the trunking system according to any one of claims 1 to 4.

## Patentansprüche

1. Dienstplanungsverfahren basierend auf einem Bündelfunksystem, das ein Kernnetzwerk umfasst, wobei das Verfahren Folgendes umfasst:
wenn Dienstdaten empfangen werden, die von einem Endgerät ohne Sprechrecht gesendet werden, Bestimmen (101) eines Sendemodus für die Dienstdaten gemäß einer Art der Dienstdaten und einer Art eines Zielendgeräts durch das Kernnetzwerk und Senden (102) der Dienstdaten an das Zielendgerät gemäß dem bestimmten Sendemodus,
wobei das Bestimmen des Sendemodus für die Dienstdaten gemäß der Art der Dienstdaten und der Art des Zielendgeräts Folgendes umfasst:
in dem Fall, dass das Kernnetzwerk bestimmt, dass die Art der Dienstdaten nicht die gleiche ist wie eine Art der Dienstdaten, die von einem Endgerät mit Sprechrecht gesendet werden (201):
wenn das Kernnetzwerk ferner bestimmt, dass das Zielendgerät ein Nicht-Bündelfunk-Endgerät ist, Herstellen (204) einer Rufverbindung zwischen dem Endgerät ohne Sprechrecht und dem Zielendgerät über das Kernnetzwerk und Senden der Dienstdaten über die Rufverbindung,
wenn das Kernnetzwerk ferner bestimmt, dass das Zielendgerät in der Gruppe ist, zu der das Endgerät ohne Sprechrecht gehört, Senden (304) der Dienstdaten über das Kernnetzwerk, und
wenn das Kernnetzwerk ferner bestimmt, dass das Zielendgerät in einer anderen Gruppe als der Gruppe ist, zu der das Endgerät ohne Sprechrecht gehört, Herstellen (404) einer Rufverbindung zwischen dem Endgerät ohne Sprechrecht und der Gruppe, zu der das Zielendgerät gehört, über das Kernnetzwerk und Senden der Dienstdaten über die Rufverbindung, wobei das Verfahren ferner **dadurch gekennzeichnet ist, dass** es Folgendes umfasst:
in dem Fall, dass das Kernnetzwerk bestimmt, dass die Art der Dienstdaten die gleiche ist wie die Art der Dienstdaten, die von dem Endgerät mit Sprechrecht gesendet werden (501):
wenn das Kernnetzwerk ferner bestimmt, dass das Zielendgerät nicht in der Gruppe ist, zu der das Endgerät ohne Sprechrecht gehört, Warten (502, 702) auf die Freigabe der Dienstdaten, die von dem Endgerät mit Sprechrecht gesendet werden, und Senden der Dienstdaten nach der Freigabe der Dienstdaten, die von dem Endgerät mit Sprechrecht gesendet werden.

2. Dienstplanungsverfahren nach Anspruch 1, wobei das Bestimmen des Sendemodus für die Dienstdaten gemäß der Art der Dienstdaten und der Art des Zielendgeräts ferner Folgendes umfasst:
in dem Fall, dass das Kernnetzwerk bestimmt, dass die Art der Dienstdaten die gleiche ist wie die Art der Dienstdaten, die von dem Endgerät mit Sprechrecht gesendet werden, wenn das Kernnetzwerk ferner bestimmt, dass das Zielendgerät in der Gruppe ist, zu der das Endgerät ohne Sprechrecht gehört, Beantragen (602) eines Sprechrechts für das Endgerät ohne Sprechrecht und Senden der Dienstdaten nach einer erfolgreichen Beantragung des Sprechrechts.

3. Dienstplanungsverfahren nach Anspruch 1, ferner Folgendes umfassend:
bevor die Dienstdaten empfangen werden, die von dem Endgerät ohne Sprechrecht gesendet werden,
wenn das Endgerät ohne Sprechrecht bestimmt, dass die Art der Dienstdaten nicht die gleiche ist wie die Art der Dienstdaten, die von dem Endgerät mit Sprechrecht gesendet werden, Senden der Dienstdaten über eine Basisstation an das Kernnetzwerk.

4. Dienstplanungsverfahren nach Anspruch 3, ferner Folgendes umfassend:
bevor die Dienstdaten von der Basisstation an das Kernnetzwerk gesendet werden,
wenn das Kernnetzwerk bestimmt, dass keine Verbindungen zwischen dem Endgerät ohne Sprechrecht und der Basisstation und zwischen der Basisstation und dem Kernnetzwerk hergestellt wurden, Herstellen von Verbindungen zwischen dem Endgerät ohne Sprechrecht und der Basisstation und zwischen der Basisstation und dem Kernnetzwerk (202, 302, 402), und
Senden (203, 303, 403) der Dienstdaten an das Kernnetzwerk über die hergestellten Verbindungen.

5. Bündelfunksystem, umfassend: eine Empfangsvorrichtung (81), eine Bestimmungsvorrichtung (82) und eine Sendevorrichtung (83),
wobei die Empfangsvorrichtung (81) dafür konfiguriert ist, Dienstdaten zu empfangen, die von einem Endgerät ohne Sprechrecht gesendet werden,
die Bestimmungsvorrichtung (82) dafür konfiguriert ist, einen Sendemodus für die Dienstdaten gemäß der Art der Dienstdaten und einer Art eines Zielendgeräts zu bestimmen, und
die Sendevorrichtung (83) dafür konfiguriert ist, die Sendedaten gemäß dem bestimmten Sendemodus an das Zielendgerät zu senden,
wobei die Bestimmungsvorrichtung (82) Folgendes umfasst: ein erstes Sendemodus-Bestimmungsmodul (821), ein zweites Sendemodus-Bestimmungsmodul (822) und ein drittes Sendemodus-Bestimmungsmodul (823),
wobei das erste Sendemodus-Bestimmungsmodul (821) dafür konfiguriert ist, wenn bestimmt wird, dass die Art der Dienstdaten nicht die gleiche ist wie eine Art der Dienstdaten, die von einem Endgerät mit Sprechrecht gesendet werden, und ferner bestimmt wird, dass das Zielendgerät ein Nicht-Bündelfunk-Endgerät ist, eine Rufverbindung zwischen dem Endgerät ohne Sprechrecht und dem Zielendgerät über das Kernnetzwerk herzustellen und die Dienstdaten über die Rufverbindung zu senden,
das zweite Sendemodus-Bestimmungsmodul (822) dafür konfiguriert ist, wenn bestimmt wird, dass die Art der Dienstdaten nicht die gleiche ist wie die Art der Dienstdaten, die von dem Endgerät mit Sprechrecht gesendet werden, und ferner bestimmt wird, dass das Zielendgerät in der Gruppe ist, zu der das Endgerät ohne Sprechrecht gehört, die Dienstdaten über das Kernnetzwerk zu senden, und
das dritte Sendemodus-Bestimmungsmodul (823) dafür konfiguriert ist, wenn bestimmt wird, dass die Art der Dienstdaten nicht die gleiche ist wie die Art der Dienstdaten, die von dem Endgerät mit Sprechrecht gesendet werden, und ferner bestimmt wird, dass das Zielendgerät in einer anderen Gruppe ist als die Gruppe, zu der das Endgerät ohne Sprechrecht gehört, eine Rufverbindung zwischen dem Endgerät ohne Sprechrecht und der Gruppe, zu der das Zielendgerät gehört, herzustellen und die Dienstdaten über die Rufverbindung zu senden, wobei das Bündelfunksystem ferner **dadurch gekennzeichnet ist, dass**:
die Bestimmungsvorrichtung (82) ferner ein fünftes Sendemodus-Bestimmungsmodul (825) umfasst, das dafür konfiguriert ist, wenn bestimmt wird, dass die Art der Dienstdaten die gleiche ist wie die Art der Dienstdaten, die von dem Endgerät mit Sprechrecht gesendet werden, und ferner bestimmt wird, dass das Zielendgerät nicht in der Gruppe ist, zu der das Endgerät ohne Sprechrecht gehört, auf die Freigabe der Dienstdaten, die von dem Endgerät mit Sprechrecht gesendet werden, zu warten und die Dienstdaten nach der Freigabe der Dienstdaten, die von dem Endgerät mit Sprechrecht gesendet werden, zu senden.

6. Bündelfunksystem nach Anspruch 5, wobei die Bestimmungsvorrichtung (82) ferner Folgendes umfasst: ein viertes Sendemodus-Bestimmungsmodul (824), das dafür konfiguriert ist, wenn bestimmt wird, dass die Art der Dienstdaten die gleiche ist wie die Art der Dienstdaten, die von dem Endgerät mit Sprechrecht gesendet werden, und ferner bestimmt wird, dass das Zielendgerät in der Gruppe ist, zu der das Endgerät ohne Sprechrecht gehört, ein Sprechrecht für das Endgerät ohne Sprechrecht zu beantragen und die Dienstdaten nach der erfolgreichen Beantragung des Sprechrechts zu senden.

7. Bündelfunksystem nach Anspruch 5, ferner eine Einrichtungsvorrichtung (84) umfassend, die dafür konfiguriert ist, wenn bestimmt wird, dass keine Verbindungen zwischen dem Endgerät ohne Sprechrecht und einer Basisstation und zwischen der Basisstation und einem Kernnetzwerk hergestellt wurden, Verbindungen zwischen dem Endgerät ohne Sprechrecht und der Basisstation und zwischen der Basisstation und dem Kernnetzwerk herzustellen,
wobei die Empfangsvorrichtung (81) ferner dafür konfiguriert ist, die Dienstdaten zu empfangen, die von dem Endgerät ohne Sprechrecht über die hergestellten Verbindungen gesendet werden.

8. Endgerät basierend auf einem Bündelfunksystem, umfassend: ein Sendemodul (91), das dafür konfiguriert ist, wenn das Endgerät Dienstdaten in einem Modus ohne Sprechrecht sendet und bestimmt wird, dass die Art der Dienstdaten nicht die gleiche ist wie eine Art der Dienstdaten, die von einem Endgerät mit Sprechrecht gesendet werden, die Dienstdaten über eine Basisstation an ein Kernnetzwerk zu senden, wobei das Endgerät ferner **dadurch gekennzeichnet ist, dass**:
wenn bestimmt wird, dass die Art der Dienstdaten die gleiche ist wie die Art der Dienstdaten, die von dem Endgerät mit Sprechrecht gesendet werden, und ferner bestimmt wird, dass ein Zielendgerät nicht in der Gruppe ist, zu der das Endgerät gehört, das Sendemodul ferner dafür konfiguriert ist, auf die Freigabe der Dienstdaten, die von dem Endgerät mit Sprechrecht gesendet werden, zu warten und die Dienstdaten nach der Freigabe der Dienstdaten, die von dem Endgerät mit Sprechrecht gesendet werden, zu senden.

9. Endgerät nach Anspruch 8, ferner ein Einrichtungsmodul (92) umfassend, das dafür konfiguriert ist, wenn bestimmt wird, dass keine Verbindungen zwischen dem Endgerät ohne Sprechrecht und der Basisstation und zwischen der Basisstation und dem Kernnetzwerk hergestellt wurden, Verbindungen zwischen dem Endgerät ohne Sprechrecht und der Basisstation und zwischen der Basisstation und dem Kernnetzwerk herzustellen,
wobei das Sendemodul (91) ferner dafür konfiguriert ist, die Dienstdaten über die hergestellten Verbindungen an das Kernnetzwerk zu senden.

10. Speichermedium mit einem darauf gespeicherten Computerprogramm, wobei das Computerprogramm dafür konfiguriert ist, das Dienstplanungsverfahren basierend auf dem Bündelfunksystem nach einem der Ansprüche 1 bis 4 durchzuführen.

## Revendications

1. Procédé de planification de service sur la base d'un système à ressources partagées comprenant un réseau central, le procédé comprenant les étapes ci-dessous consistant à :
lorsque des données de service envoyées par un terminal sans droit de parole sont reçues, déterminer (101), par le biais du réseau central, un mode d'envoi pour les données de service selon un type des données de service et un type d'un terminal cible, et envoyer (102) les données de service au terminal cible selon le mode d'envoi déterminé ;
dans lequel l'étape de détermination du mode d'envoi pour les données de service selon le type des données de service et le type du terminal cible comprend les étapes ci-dessous consistant à :
dans le cas où le réseau central détermine que le type des données de service n'est pas le même qu'un type de données de service envoyées par un terminal à droit de parole (201),
lorsque le réseau central détermine en outre que le terminal cible est un terminal à ressources non partagées, établir (204) une connexion d'appel entre le terminal sans droit de parole et le terminal cible par l'intermédiaire du réseau central, et envoyer les données de service par l'intermédiaire de la connexion d'appel ;
lorsque le réseau central détermine en outre que le terminal cible fait partie du groupe auquel appartient le terminal sans droit de parole, envoyer (304) les données de service par l'intermédiaire du réseau central ; et
lorsque le réseau central détermine en outre que le terminal cible fait partie d'un groupe distinct du groupe auquel appartient le terminal sans droit de parole, établir (404) une connexion d'appel entre le terminal sans droit de parole et le groupe auquel appartient le terminal cible, par l'intermédiaire du réseau central, et envoyer les données de service par l'intermédiaire de la connexion d'appel ; le procédé étant en outre **caractérisé en ce qu'**il comprend les étapes ci-dessous consistant à :
dans le cas où le réseau central détermine que le type des données de service est le même que le type des données de service envoyées par le terminal à droit de parole (501),
lorsque le réseau central détermine en outre que le terminal cible ne fait pas partie du groupe auquel appartient le terminal sans droit de parole, attendre (502, 702) la libération des données de service envoyées par le terminal à droit de parole, et envoyer les données de service après la libération des données de service envoyées par le terminal à droit de parole.

2. Procédé de planification de service selon la revendication 1, dans lequel l'étape de détermination du mode d'envoi des données de service selon le type des données de service et le type du terminal cible comprend en outre l'étape ci-dessous consistant à :
dans le cas où le réseau central détermine que le type des données de service est le même que le type des données de service envoyées par le terminal à droit de parole, lorsque le réseau central détermine en outre que le terminal cible fait partie du groupe auquel appartient le terminal sans droit de parole, demander (602) un droit de parole pour le terminal sans droit de parole, et envoyer les données de service après une demande de droit de parole acceptée.

3. Procédé de planification de service selon la revendication 1, comprenant en outre l'étape ci-dessous consistant à : avant que les données de service envoyées par le terminal sans droit de parole ne soient reçues,
lorsque le terminal sans droit de parole détermine que le type des données de service n'est pas le même que le type des données de service envoyées par le terminal à droit de parole, envoyer les données de service par l'intermédiaire d'une station de base, au réseau central.

4. Procédé de planification de service selon la revendication 3, comprenant en outre les étapes ci-dessous consistant à : avant d'envoyer les données de service par le biais de la station de base au réseau central ;
lorsque le réseau central détermine que des connexions n'ont pas été établies entre le terminal sans droit de parole et la station de base, et entre la station de base et le réseau central, établir des connexions entre le terminal sans droit de parole et la station de base, et entre la station de base et le réseau central (202, 302, 402) ; et
envoyer (203, 303, 403) les données de service au réseau central par l'intermédiaire des connexions établies.

5. Système à ressources partagées, comprenant : un appareil de réception (81), un appareil de détermination (82) et un appareil d'envoi (83),
dans lequel l'appareil de réception (81) est configuré de manière à recevoir des données de service envoyées par un terminal sans droit de parole ;
l'appareil de détermination (82) est configuré de manière à déterminer un mode d'envoi pour les données de service selon le type des données de service et un type d'un terminal cible ; et
l'appareil d'envoi (83) est configuré de manière à envoyer les données de service au terminal cible selon le mode d'envoi déterminé ;
dans lequel l'appareil de détermination (82) comprend : un premier module de détermination de mode d'envoi (821), un deuxième module de détermination de mode d'envoi (822) et un troisième module de détermination de mode d'envoi (823) ;
dans lequel le premier module de détermination de mode d'envoi (821) est configuré de manière à, lorsqu'il est déterminé que le type des données de service n'est pas le même qu'un type de données de service envoyées par un terminal à droit de parole et lorsqu'il est en outre déterminé que le terminal cible est un terminal à ressources non partagées, établir une connexion d'appel entre le terminal sans droit de parole et le terminal cible par l'intermédiaire d'un réseau central, et envoyer les données de service par l'intermédiaire de la connexion d'appel ;
le deuxième module de détermination de mode d'envoi (822) est configuré de manière à, lorsqu'il est déterminé que le type des données de service n'est pas le même que le type des données de service envoyées par le terminal à droit de parole et lorsqu'il est en outre déterminé que le terminal cible fait partie du groupe auquel appartient le terminal sans droit de parole, envoyer les données de service par l'intermédiaire du réseau central ; et
le troisième module de détermination de mode d'envoi (823) est configuré de manière à, lorsqu'il est déterminé que le type des données de service n'est pas le même que le type des données de service envoyées par le terminal à droit de parole et lorsqu'il est en outre déterminé que le terminal cible fait partie d'un groupe distinct du groupe auquel appartient le terminal sans droit de parole, établir une connexion d'appel entre le terminal sans droit de parole et le groupe auquel appartient le terminal cible, par l'intermédiaire du réseau central, et envoyer les données de service par l'intermédiaire de la connexion d'appel, le système à ressources partagées étant en outre **caractérisé en ce que** :
l'appareil de détermination (82) comprend en outre un cinquième module de détermination de mode d'envoi (825), configuré de manière à, lorsqu'il est déterminé que le type des données de service est le même que le type des données de service envoyées par le terminal à droit de parole et lorsqu'il est en outre déterminé que le terminal cible ne fait pas partie du groupe auquel le terminal sans droit de parole appartient, attendre la libération des données de service envoyées par le terminal à droit de parole, et envoyer les données de service après la libération des données de service envoyées par le terminal à droit de parole.

6. Système à ressources partagées selon la revendication 5, dans lequel l'appareil de détermination (82) comprend en outre : un quatrième module de détermination de mode d'envoi (824), configuré de manière à, lorsqu'il est déterminé que le type des données de service est le même que le type des données de service envoyées par le terminal à droit de parole, et lorsqu'il est en outre déterminé que le terminal cible fait partie du groupe auquel appartient le terminal sans droit de parole, demander un droit de parole pour le terminal sans droit de parole, et envoyer les données de service après une demande de droit de parole acceptée.

7. Système à ressources partagées selon la revendication 5, comprenant en outre un appareil d'établissement (84) configuré de manière à, lorsqu'il est déterminé que des connexions n'ont pas été établies entre le terminal sans droit de parole et une station de base, et entre la station de base et un réseau central, établir des connexions entre le terminal sans droit de parole et la station de base, et entre la station de base et le réseau central ;
dans lequel l'appareil de réception (81) est en outre configuré de manière à recevoir les données de service envoyées par le terminal sans droit de parole, par l'intermédiaire des connexions établies.

8. Terminal basé sur un système à ressources partagées, comprenant : un module d'envoi (91) configuré de manière à,
lorsque le terminal envoie des données de service dans un mode sans droit de parole et lorsqu'il est déterminé que le type des données de service n'est pas le même qu'un type de données de service envoyées par un terminal à droit de parole, envoyer les données de service, par l'intermédiaire d'une station de base, à un réseau central, le terminal étant en outre **caractérisé en ce que** :
lorsqu'il est déterminé que le type des données de service est le même que le type des données de service envoyées par le terminal à droit de parole, et lorsqu'il est en outre déterminé qu'un terminal cible ne fait pas partie du groupe auquel appartient le terminal, le module d'envoi est en outre configuré de manière à attendre la libération des données de service envoyées par le terminal à droit de parole, et à envoyer les données de service après la libération des données de service envoyées par le terminal à droit de parole.

9. Terminal selon la revendication 8, comprenant en outre un module d'établissement (92) configuré de manière à, lorsqu'il est déterminé que des connexions n'ont pas été établies entre le terminal sans droit de parole et la station de base, et entre la station de base et le réseau central, établir des connexions entre le terminal sans droit de parole et la station de base, et entre la station de base et le réseau central ;
dans lequel le module d'envoi (91) est en outre configuré de manière à envoyer les données de service au réseau central, par l'intermédiaire des connexions établies.

10. Support de stockage dans lequel est stocké un programme informatique, le programme informatique étant configuré de manière à mettre en oeuvre le procédé de planification de service sur la base du système à ressources partagées selon l'une quelconque des revendications 1 à 4.
